# EUROPEAN PATENT APPLICATION

(11) **EP 1 826 982 A1**
(43) Date of publication of application: **29.08.2007**
(21) Application number: 06300168.9
(22) Date of filing: 28.02.2006
(51) Int. Cl.: H04L 29/06, G06F 15/17

(54) **Building block for multimedia system, streaming system and server having the same**

(71) Applicant: Thomson Licensing, 92100 Boulogne-Billancourt (FR)
(72) Inventor: Zhang, Huan Qiang, Rm 03-09, 8F, Bldg. A, Hai Dian District, 100085 Beijing (CN); Ma, Xiao Jun, Rm 03-09, 8F, Bldg. A, Hai Dian District, 100085 Beijing (CN); Chen, Ren Lei, Rm 03-09, 8F, Bldg. A., Hai Dian District, 100085 Beijing (CN); Wang, Charles, Rm 03-09, 8F, Bldg.A, Hai Dian District, 100085 Beijing (CN)
(74) Representative: Rossmanith, Manfred

(57) **Abstract**

The present invention provides a building block (300) for a multimedia system, which comprises a functional module (302) for processing a multimedia data; a switching module (304) coupled with the functional module (302), for switching the processed multimedia data to at least one port (306,308); and the at least one port (306,308) coupled with both the functional module (302) and the switching module (304), for inputting the multimedia data and/or outputting the processed multimedia data. The present invention also provides a streaming server and system made up of the building blocks.

## Description

### FIELD OF THE INVENTION

The present invention relates generally to multimedia technologies, and particularly to building block architecture for multimedia systems, and streaming systems as well as servers having the same.

### BACKGROUND OF THE INVENTION

Over the last few years, there has been a steadily increasing amount of video content distributed via the internet. Streaming live video on (wireless) IP network has become very popular nowadays. The focuses in this field include: FEC (Forward Error Correction), security, traffic shaping, streaming reflector etc. Currently, these functionalities are implemented as close-coupled modules/plug-ins in a streaming server program (like QuickTime streaming server from Apple, Helix DNA Server from RealNetworks, Inc., and Microsoft Windows Media Server).

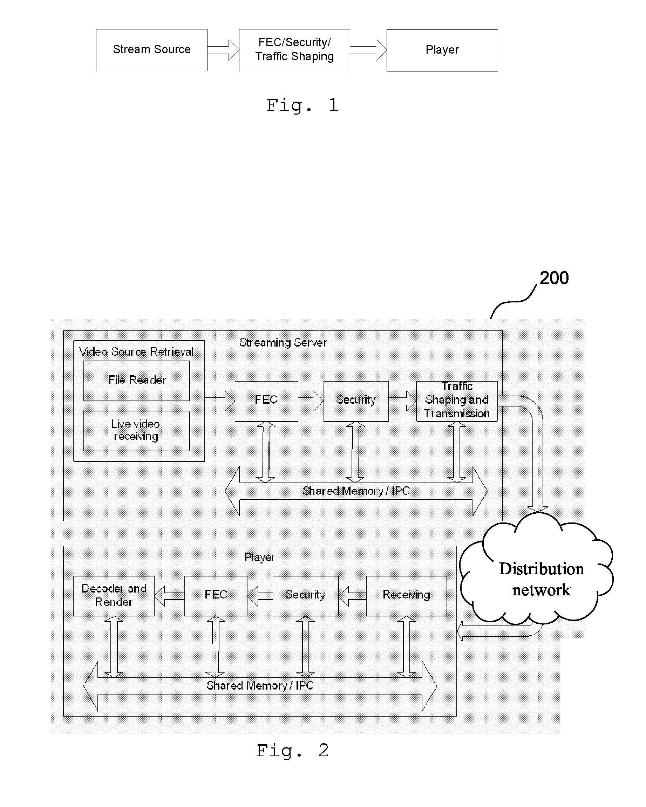

Fig. 1 shows a basic video streaming process. As show in Fig. 1, a WLAN streaming application, generally, has stream processing modules like FEC, security and traffic shaping to assure the secure and efficient delivery of live video streams to end users after the video data is retrieved from the source.

Fig. 2 shows the block diagram of a conventional video streaming system **200**, such as MS media server, Apple Darwin Streaming Server etc. In this case, FEC, security and packet shaping modules are all implemented as separate threads or processes which closely couple with each other through shared memory or other IPC mechanisms (pipe, message or socket), and the communication among these modules must be carefully designed.

Correspondingly, in order to successfully play back the received programs in terminals, the corresponding modules must also be implemented in players, either as programming components or as plug-ins.

The serious disadvantages of this streaming architecture design include:
1. The lack of flexibility and scalability: these close-coupled modules are hard to be deployed into different physical servers when more processing power is needed in a streaming system;
2. The lack of interoperability between systems from different vendors: these modules/plug-ins can only be integrated into the vendor's own streaming system; and
3. They are player-dependent technologies: the player must be aware of the FEC and security, and extra supports must be added into the players in order to play the program correctly.

In order to avoid the above problems, EP1257278 proposed a modular-based streaming server architecture design which tries to separate the functionalities of request processing and media transmission apart by dividing the streaming server into media directory and media engine, thereby to achieve load balance inside stream system. But it cannot extend the scalability and interoperability of the streaming server. U.S. Patent No. 20040088412 taught a solution on how to use server cluster to increase the number of the concurrent serviceable request by automatically distributing some video clips in a plurality of servers. However, this solution fails to build up a streaming server using building block architecture.

Therefore, one object of the present invention is to provide streaming server functionality components like FEC, security, traffic shaping, streaming reflector *etc.* with scalability and interoperability.

In order to achieve the above object, the present invention proposes a novel streaming server architecture: ***LooTAS*** (an abbreviation of ***Loo**sely-coupled **T**ransparent **A**rchitecture for **S**treaming).* The basic idea of ***LooTAS*** is to implement the basic streaming functionalities (like FEC, security *etc.)* as transparent/independent building blocks.

### SUMMARY OF THE INVENTION

In accordance with the present invention, a building block for a multimedia system is provided.

The building block in accordance with the present invention comprises: a functional module for processing a multimedia data; a switching module coupled with the functional module, for switching the processed multimedia data to at least one port; and the at least one port coupled with both the functional module and the switching module, for inputting the multimedia data and/or outputting the processed multimedia data.

In accordance with the present invention, the functional module has at least one selected from the group comprising FEC function, security function, traffic shaping function, and streaming reflector. The functional module comprises: a packet filter module, for intercepting and filtering packets from an operating system; and a processing module, for receiving the filtered packets from the packet filter module.

In accordance with the present invention, the packet filter module comprises: a packet filter kernel module for intercepting packets from the operating system; a packet retrieval module for retrieving the packets need to be processed from the packet filter kernel module and sending the same to the processing module; and a packet transmission module for receiving the processed packets from the processing module and transmitting the same to the packet filter kernel module.

In accordance with the present invention, the packet filter module is a Netfilter in Linux system or a Packet filter using Winsock SPI technology in MS windows system.

In accordance with the present invention, the processing module comprises: a processing policy table, for storing the information of how to process the packets of a certain stream; a packet classifier, for classifying the incoming packets according to the information in the processing policy table; a stream processing module, for processing packets according to the specification in processing policy table; and a stream output module, for outputting the processed packets.

In accordance with the present invention, the at least one port is an Ethernet port.

Preferably the at least one port comprises a first Ethernet port for inputting packets and a second Ethernet port for outputting packets.

In accordance with the present invention, the multimedia system is a streaming system, which is formed with the building blocks resided in separate physical computers.

In accordance with the present invention, the multimedia system is a streaming server, which is formed with the building blocks resided in a single computer.

The above-mentioned building block can exist as a software module.

In addition, the present invention also provides a streaming server and system comprising a plurality of building blocks mentioned above.

Other objects, advantages and novel features of the present invention will become more apparent from the following detailed description when taken in conjunction with the accompanying drawings.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
Fig. 1 shows a basic video streaming process;
Fig. 2 shows the block diagram of a conventional video streaming system **200;**
Fig. 3 shows a building block **300** according to the present invention;
Fig. 4 shows a ***LooTAS*** streaming architecture **400** including the building blocks **300** of Fig. 3;
Fig. 5 shows the logic block diagram of the building block **300** of Fig. 3; and
Fig. 6 shows the logic block diagram of a processing module **600** in the building block **300** of Fig. 3.

### DETAILED DESCRIPTION OF THE PREFERRED EMBODIMENT

The technical features of the present invention will be described further with reference to the embodiments. The embodiments are only preferable examples without limiting to the present invention. It will be well understood by the skilled person in the art upon reading the following detail description in conjunction with the accompanying drawings.

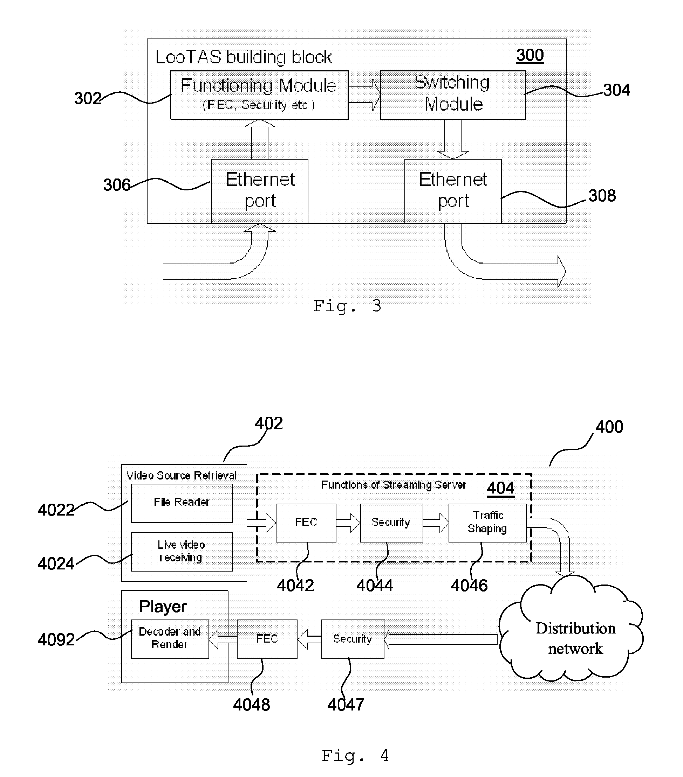

Fig. 3 shows a building block **300** for the ***LooTAS*** according to the present invention. As the above described, ***LooTAS*** is proposed to implement the basic streaming functionality as transparent building blocks. As shown in Fig. 3, the building block **300** comprises a first Ethernet port **306** for inputting multimedia data; a functional module **302** for processing the multimedia data from first Ethernet port **306;** a switching module **304** coupled with the functional module **302;** and a second Ethernet port **308** for receiving and outputting the processed multimedia data from the switching module **304..**

Although Fig. 3 only shows one building block **300,** those skilled in the art can understand, with reference to the present invention, that a plurality of building blocks can be chained together to form a streaming server or system. Each building block logically functions like a two-port Ethernet switch (but with extra functionality like FEC, security etc.), and can communicate with each other through Ethernet frames.

Although Fig. 3 shows two Ethernet port **(306, 308)** used for inputting and outputting multimedia datum, it is easy to understand that this technical solution can adopt only one port being able to exchange data with the outside. It is understood that any kinds of port other than Ethernet port can be used here, if it can receive and/or send data to and/or from outside.

The switching module always switches Ethernet frames coming from one port to another port. To make it simple, the data stream in Fig. 3 is from Ethernet port **306** to **308,** but there can be reverse streams.

These building blocks have the same architecture. These blocks are completely independent with streaming sources and players, and also completely independent with each other, so they can be flexibly connected at any parts of a network, and a streaming server can be built up by connecting several building blocks together. Physically speaking, these building blocks can reside in separate physical computers, while they can also exist as software modules, and can be grouped together into the same physical computer to form a streaming server.

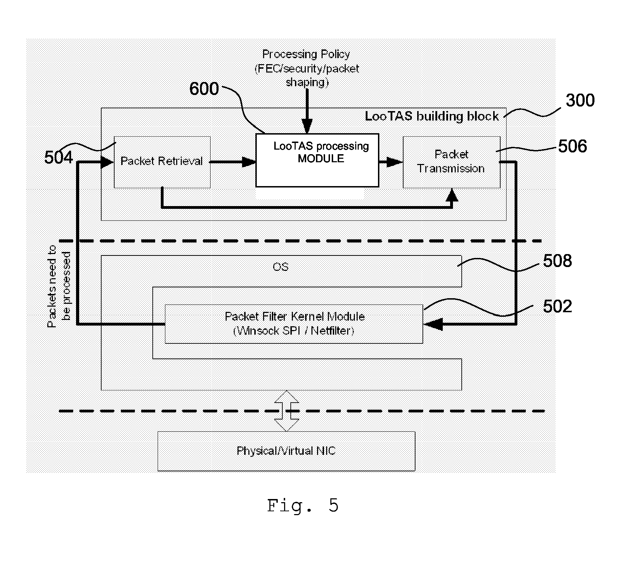

Fig. 4 shows a ***LooTAS*** streaming architecture **400** having building blocks **300** of Fig. 3.

As shown in Fig. 4, the ***LooTAS*** streaming architecture **400** has a server side and a client side. The server side includes a video source retrieval module **402** and a functional module **404** of streaming server. The video source retrieval module **402** includes a file reader **4022** for reading file, and a live video receiving unit **4024** for receiving a live video from a live source (not shown), and the functional module **404** includes a first FEC module **4042,** a first Security module **4044,** and a Traffic Shaping module **4046.** The Traffic Shaping module **4046** couples with a distribution network.

The client side includes a second security module **4047** coupled with the distribution network, a second FEC module **4048,** and a player **4049** including a decoder and render module **4092.**

The great benefit of ***LooTAS*** streaming architecture is that its flexibility and scalability. The building blocks can be easily connected together in a chain, and/or in any order. As shown in Fig. 4, building blocks of FEC, security and traffic shaping are serially connected together at server side to offer streaming server functionality, and the corresponding building blocks are also installed in the client side.

In Fig. 4, the video source retrieval modules 402 comprises a file reader **4022** and a live video receiving module **4024.** File reader **4022** can read video data from disk, and then transmit them in network. The live video receiving module **4024** can receiving live video from camera, then codes and transmits the video data into the network. The loose-coupled LooTAS building blocks **4042, 4044** and **4046** at server side implement the functionality of a streaming server. The FEC building block **4042** receives video data from one Ethernet port (which may be physical or logic port), generates FEC redundant data, and transmits them along with the original data to another Ethernet port. The security building block **4044** receiving video data from one Ethernet port, encrypts the data packets, and transmits them to another port. The traffic shaping module smoothes the video traffic before it is delivered into distribution network. Building blocks **4047** and **4048** are corresponding decryption and FEC decoding modules located in clients.

Fig. 5 shows the logic block diagram of the building block **300** according to the present invention.

The modules in LooTAS building block can be classified into two groups:

### 1. LooTAS packet filter modules 500

The modules shown in Fig. 5 include a packet filter kernel module **502,** a packet retrieval module **504,** and packet transmission module **506.** The function of these modules is to intercept the wanted network packets from the OS (Operating System) **508,** and then deliver them to a ***LooTAS*** processing module **600.** After processing, the outcoming packets are then injected into the OS packet queue to be processed further by OS **508.**

Fig. 5 shows the general architecture design of a LooTAS building block. As a software system, the LooTAS building block has a kernel component and a user space module to collaborate with each other in fulfilling the packet retrieving, transmission and processing operations. As shown in Fig.5, a packet filter kernel module **502** is embedded into the OS **508** kernel space, whose functionality is to retrieve the concerned packets from network card (otherwise named NIC: Network Interface Card). The upper-level user space module **300** is the main part of LooTAS building block, and it is comprised of three components: packet retrieval module **504,** LooTAS processing module **600** and packet transmission module **506**. Packet retrieval module **504** and packet transmission module 506 collaborate with kernel space component 502 to fulfill the packet retrieving and transmission operations. The core of the user-space LooTAS building block module 300 is LooTAS processing module **600,** it choose the needed packets from packet retrieval module **504,** and does FEC/security/packet schedule operations on these packet, then forwards the packets to packet transmission module 506.

Depending on the OS, the mechanism used to filter packets is different. For example, in Linux system, Netfilter is used to intercept the packets, which are then redirected to user space packet retrieval module (which uses netlink socket to get the packets). However, in MS Windows system, Winsock2 SPI technology is adopted.

### a. Packet Filter in Linux

In Linux system, Netfilter offers a good environment to filter packets in kernel space; it also has the ability to redirect the filtered packets to a user space program through Netlink socket.

### b. Packet Filter in Windows

Packet filter in Windows can be implemented both in kernel space (NDIS hooker, intermediate driver or other mechanisms) and user space (Winsock2 SPI).

### 2. LooTAS processing module 600

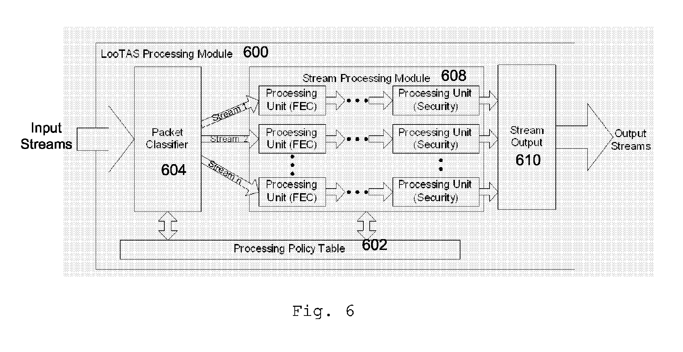

This module **600**, which will be described in detail in Fig. 6, implements the specific streaming processing functionality, like FEC, security, or packet schedule. The ***LooTAS*** processing module **600** is a user space program, and its function is to implement the specific streaming functionality, like FEC, security, or packet scheduling.

As shown in Fig. 6, the ***LooTAS*** processing module **600** comprises:

### 1. Processing policy table 602

This table should be established from the information got from a global program information server. The possible format of the table is shown in table 1, it contains the information of how to process the packets of a certain stream.

**Table 1: Possible Format of Processing Policy**

| Stream ID | Protocol | Source Addr | Source Port | Destination Address | Destination Port | FEC Policy | Security Policy | Packet Schedule Policy |
|---|---|---|---|---|---|---|---|---|
| 0 | UDP | 10.1.1.1 | 8000 | 10.1.1.53 | 9867 | XOR | AES | Avg:500K Burst: 3 |
| 0 | UDP | 10.1.1.1 | 8000 | 255.1.1.3 | 9000 | XOR + Random Interleaving | AES | Avg:500K Burst: 3 |

### 2. Packet classifier 604

The packet classifier module classifies the incoming packets according to the information in processing policy table **602.** After classification, this module attaches forward the packets to appropriate processing unit.

### 3. Stream processing module 608

The stream processing module includes one processing unit for one function entity, like FEC or security. This processing unit can be cascaded together. Each processing unit does packet processing according to the specification in processing policy table **602.** The cascaded processing units for one stream are running in a separate thread.

### 4. Stream output modules 610

This is a simple module, which interfaces the ***LooTAS*** processing module with the packet transmission module of the whole ***LooTAS*** building block.

Fig. 6 shows the possible detailed design of a LooTAS processing module **600.** When a packet comes into a LooTAS processing module **600,** first the packet classifier will query the packet processing policy table **602,** and delivered the packet to appropriate stream processing modules **608.** After going through a series of processing, the stream processing module **608** will deliver the stream packets to stream output module **610,** it then will call packet transmission module **506** and send the packet to the network.

Whilst there has been described in the forgoing description preferred embodiments and aspects of the present invention, it will be understood by those skilled in the art that many variations in details of design or construction may be made without departing from the present invention. The present invention extends to all features disclosed both individually, and in all possible permutations and combinations.

## Claims

1. A building block **(300)** for a multimedia system, comprising:
a functional module **(302)** for receiving and processing a multimedia data;
a switching module **(304)** coupled with the functional module **(302),** for switching the processed multimedia data to at least one port **(306, 308);** and
the at least one port **(306, 308)** coupled with both the functional module **(302)** and the switching module **(304),** for inputting the multimedia data and/or outputting the processed multimedia data.

2. The building block **(300)** according to claim 1, wherein the functional module **(302)** has at least one selected from the group comprising FEC function, security function, traffic shaping function, and streaming reflector.

3. The building block **(300)** according to any one of claims 1 and 2, wherein the functional module **(302)** comprises:
a packet filter module **(500)** for intercepting and filtering packets from an operating system **(508);** and
a processing module **(600)** for receiving the filtered packets from the packet filter module **(500).**

4. The building block **(300)** according to claim 3, wherein the packet filter module **(500)** comprises:
a packet filter kernel module **(502)** for intercepting packets from the operating system **(508);**
a packet retrieval module **(504)** for retrieving the packets to be processed from the packet filter kernel module **(502)** and sending the packets to the processing module **(600);** and
a packet transmission module **(506)** for receiving the processed packets from the processing module **(600)** and transmitting the processed packets to the packet filter kernel module **(502).**

5. The building block **(300)** according to claim 3, wherein the packet filter module **(500)** is a Netfilter in Linux system.

6. The building block **(300)** according to claim 3, wherein the packet filter module **(500)** is a Packet filter using Winsock SPI technology in MS windows system.

7. The building block **(300)** according to claim 3, wherein the processing module **(600)** comprises:
a processing policy table **(602)** for storing the information of how to process the packets of a certain stream;
a packet classifier **(604)** for classifying the incoming packets according to the information in the processing policy table **(602);**
a stream processing module **(608)** for processing packets according to the specification in processing policy table **(602);** and
a stream outputting module **(610)** for outputting the processed packets.

8. The building block **(300)** according to any one of claims 1 to 7, wherein the at least one port **(306, 308)** is an Ethernet port.

9. The building block **(300)** according to any one of claims 1 to 7, wherein the at least one port **(306, 308)** comprises: a first Ethernet port **(306)** for inputting packets; and a second Ethernet port **(308)** for outputting packets.

10. The building block **(300)** according to any one of claims 1 to 7, wherein the multimedia system **(400)** is a streaming system.

11. The building block **(300)** according to any one of claims 1 to 7, wherein the building block **(300)** resides in separate physical computers.

12. The building block **(300)** according to any one of claims 1 to 7, wherein the building block **(300)** is a software module.

13. A streaming server **(404)** comprising a plurality of building blocks **(4042, 4044,** and **4046)** according to any one of claims 1 to 12, which are grouped together into an identical physical computer.

14. A streaming system **(400)** comprising a plurality of building blocks **(4042, 4044, 4046, 4047,** and **4048)** according to any one of claims 1 to 12, which are distributed in separate physical computers.
